# EUROPÄISCHE PATENTSCHRIFT

(11) **EP 3 091 188 B1**
(45) Veröffentlichungstag und Bekanntmachung des Hinweises auf die Patenterteilung: **01.08.2018**
(21) Anmeldenummer: 15166897.7
(22) Anmeldetag: 08.05.2015
(51) Int. Cl.: F01D 9/02, F01D 11/00

(54) **STRÖMUNGSMASCHINE MIT EINER DICHTUNGSEINRICHTUNG**
FLOW ENGINE WITH A SEALING ARRANGEMENT
TURBOMACHINE DOTÉE D'UN DISPOSITIF D'ÉTANCHÉITÉ

(43) Veröffentlichungstag der Anmeldung: 09.11.2016
(73) Patentinhaber: MTU Aero Engines AG, 80995 München (DE)
(72) Erfinder: Feldmann, Manfred, 82223 Eichenau (DE); Kirchner, Daniel, 80639 München (DE)

(56) Entgegenhaltungen:
- EP-A2- 2 592 232
- US-A- 5 118 120
- US-B1- 6 464 232
- US-B2- 6 988 369

## Beschreibung

Die Erfindung betrifft eine Strömungsmaschine mit einer Dichtungseinrichtung nach dem Oberbegriff des Patentanspruchs 1.

Zur Abdichtung von Luft an Ringspalten zwischen in Strömungsrichtung benachbarten statischen Heißgasführungen von Strömungsmaschinen, wie Flugtriebwerken Stationärgasturbinen, werden häufig segmentierte Dichtbleche verwendet, die im Betrieb durch einen Differenzdruck auf bauteilseitige Dichtkanten bzw. Dichtflächen gedrückt werden. Zum Ausgleich von Relativverschiebungen der Dichtkanten zueinander aufgrund von Wärmeausdehnungen, Maschinenschwingungen und dergleichen sind die Dichtbleche häufig verkippbar an wenigstens einem Bauteil der Heißgasführungen gelagert. Damit sich zu Beginn beim Hochfahren der Strömungsmaschine aus dem Stillstand der Differenzdruck aufbauen kann, ist es erforderlich, dass das Dichtblech auch ohne Drucklast bereits ein Hindernis für die strömende Luft darstellt und seine Dichtwirkung entfaltet. Dazu werden die Dichtbleche im Stillstand mittels Federn in ihre Dichtposition gegen die Dichtkanten gedrückt. Im Betrieb folgen die Federn der von der Umgebung aufgeprägten Relativverschiebung der Bauteile zueinander. Wenn nun zusätzlichen zu den thermischen Belastungen die Federn aufgrund von großen Relativverschiebungen hohen Dehnungen ausgesetzt werden, kann ihr Werkstoff zu kriechen beginnen. Die Federn verlieren ihre Vorspannung, so dass sie beim Hochfahren der Strömungsmaschine die Dichtbleche nicht mehr dichtend gegen die Dichtkanten drücken können.

In der US 6,988,369 B2 ist eine Strömungsmaschine mit einer Dichtungseinrichtung zum Abdichten eines Spaltes zwischen zwei Statorbauteilen gezeigt, die ein segmentiertes Dichtelement zum Lagern bzw. Haltern an dem einen Bauteil und zum Überbrücken des Spaltes, und ein Vorspannelement zum Drücken des Dichtelements gegen jeweils eine Dichtkante der Statorbauteile aufweist. Das Vorspannelement ist an dem lagerungsseitigen Statorbauteil festgesetzt. Die Dichtkante des lagerungsseitigen Statorbauteils ist lagerungsnah und die Dichtkante des lagerungsfreien Statorbauteils ist lagerungsfern. Die lagerungsnahe Dichtkante ist zwischen der Lagerung und der lagerungsfernen Dichtkante angeordnet, wobei das Vorspannelement rückseitig zu den Dichtkanten zwischen den Dichtkanten an dem Dichtelement nahe der lagerungsnahen Dichtkante und fern der lagerungsfernen Dichtkante angreift. Das Vorspannelement ist V-förmig und hat einen Stützschenkel, mittels dem es an dem lagerseitigen Statorbauteil anliegt. Beim Stauchen des Vorspannelementes in Folge einer Relativverschiebung der Dichtkanten zueinander neigt das Vorspannelement dazu, mit seinem Stützschenkel von dem lagerseitigen Statorbauteil abzuheben.

Eine vergleichende Dichtungseinrichtung ist in der EP 1 156 188 A2 gezeigt. Ein Vorspannelement ist als U-förmige Blattfeder ausgebildet und mit seinem einen Endabschnitt fest mit einem lagerseitigen Statorbauteil verbunden. Sein anderer Endabschnitt greift am Dichtblech an. Das Fixieren der Vorspannfeder an dem lagerseitigen Bauteil ist jedoch aufwendig.

Aus der DE 40 06 498 A1 und der US 8,257,028 B2 ist zudem bekannt, die Vorspannelemente als Spiralfedern auszubilden, die unmittelbar auf einem Lagerungsbolzen für die Dichtelemente gelagert sind.

Weitere Strömungsmaschinen mit Dichtungseinrichtungen sind in der US 6,464,232 B1, US 5,118,120 A, US 6,464,457 B1, US 7,040,098 B2, US 8,459,041 B2, US 6,464,457 B1, US 5,797,723, DE 10 2006 017 377 A1, US 2012/0107122 A1 und in der US 6,431,555 B1 gezeigt.

Aufgabe der Erfindung ist es, eine Strömungsmaschine zu schaffen, bei der ein Spalt zwischen zwei Statorbauteilen zuverlässig abgedichtet ist.

Diese Aufgabe wird gelöst durch eine Strömungsmaschine mit den Merkmalen des Patentanspruchs 1.

Eine erfindungsgemäße Strömungsmaschine mit einer Dichtungseinrichtung zum Abdichten eines Spaltes zwischen zwei Statorbauteilen hat eine Vielzahl von Dichtelementen, die an dem einen Statorbauteil gelagert bzw. gehaltert sind und den Spalt überbrücken, sowie eine Vielzahl von Vorspannelementen, mittels denen die Dichtelemente gegen jeweils eine Dichtkante der Statorbauteile vorgespannt sind. Die Vorspannelemente sind an dem lagerungsseitigen Statorbauteil angeordnet. Die Dichtkante des lagerungsseitigen Statorbauteils ist lagerungsnah und die Dichtkante des lagerungsfreien Statorbauteils ist lagerungsfern. Die lagerungsnahe Dichtkante ist, insbesondere in Radialrichtung und/oder Axialrichtung, zwischen der Lagerung der Dichtelemente und der lagerungsfernen Dichtkante angeordnet. Die Vorspannelemente greifen rückseitig zu den Dichtkanten zwischen den Dichtkanten an den Dichtelementen nahe der lagerungsnahen Dichtkante und entfernt von der lagerungsfernen Dichtkante an. Erfindungsgemäß stützen sich die Vorspannelemente jeweils an einer vorderen Stützstelle und einer hinteren Stützstelle des lagerungsseitigen Statorabschnitts ab, die in Axialrichtung und Radialrichtung der Strömungsmaschine voneinander beabstandet sind, wobei die vordere Stützstelle radial außen und die hintere Stützstelle radial innen zur Lagerung angeordnet ist. Die Begriffe "Radialrichtung" bzw. "radial", "Axialrichtung" bzw. "axial" und "Umfangsrichtung" sind bezogen auf eine Rotorlängsachse der Strömungsmaschine. Der Begriff "Strömungsrichtung" bezieht sich auf die Richtung der Gasströmung in der Strömungsmaschine und ist somit eine Richtung parallel zur Rotorlängsachse von einem Gaseinlass zu einem Gasauslass der Strömungsmaschine.

Mit "Lagerung" im Sinne der vorliegenden Anmeldung ist insbesondere die Stelle gemeint, an der das jeweilige Dichtelement unverlierbar an dem einen Statorbauteil gelagert bzw. gehalten sind. Auch bei einem Verlust der Vorspannung des wenigstens einen Vorspannelements ist zu verhindern, dass sich die Dichtelemente von dem wenigstens einem Statorbauteil lösen können. Durch die erfindungsgemäße axial und radial versetzte Abstützung der Vorspannelemente wird eine Momentenabstützung der Vorspannelemente geschaffen. Die Stützstellen liegen sich in Radialrichtung versetzt gegenüber, wobei die in Richtung eines unterbundenen Leckagestroms bzw. in Axialrichtung betrachtet vordere Stützstelle eine freie Federlänge der Vorspannelemente begrenzt und die in Axialrichtung betrachtet hintere Stütz stelle eine Verdrehung bzw. Verkippung der Vorspannelemente bei einer Überwindung ihrer Vorspannkraft durch eine Gegenkraft verhindert. Die Gegenkraft wird beispielsweise durch eine axiale Verkleinerung des Spaltes infolge einer Relativverschiebung der Statorbauteile aufeinander zu aufgebracht. Ursachen können thermische Ausdehnungen, Maschinenvibrationen und dergleichen sein.

Die Dichtungseinrichtung ist technisch einfach zu fertigen, zu montieren und zu warten, wenn die Vorspannelemente erfindungsgemäß mit jeweils einem hakenartigen Stützabschnitt in einer Umfangsnut des lagerseitigen Statorbauteils aufgenommenen sind und die Stützstellen von zwei radial zueinander versetzten bzw. schräg gegenüberliegenden Nutwandungsabschnitten gebildet sind. Hierdurch bilden die Nutwandungen unmittelbar die Stützstellen. Der hakenartige Stützabschnitt ermöglicht neben einer stabilen Abstützung einen Toleranzausgleich von beispielsweise Bauteiltoleranzen, da er aufgrund seiner Form grundsätzlich stauchbar ist.

Die Vorspannelemente lassen sich technisch einfach ausführen, wenn sie blattfederartig mit einem U-förmigen Federabschnitt ausgebildet sind. Über die Länge des Federabschnitts lässt sich eine Federkennlinie genau einstellen und somit individuell an das geforderte Dichtverhalten anpassen.

Bei einem Ausführungsbeispiel ist der Federabschnitt rückwärtig abgewinkelt. Hierdurch wird trotz einer Verlängerung der freien Federlänge eine kompakte Bauweise erreicht, so dass benachbarte Bauteile nicht beeinträchtigt werden, der Federabschnitt nicht zu Schwingungen angeregt wird und dergleichen.

Die Herstellung und Montage der Vorspannelemente lässt sich weiter vereinfachen, wenn der Federabschnitt und der Stützabschnitt zwei gegenüberliegende Endabschnitte haben bzw. bilden, zwischen denen die Lagerung der Dichtelemente, insbesondere in Axialrichtung und/oder in Radialrichtung, erfolgt. Das Vorspannelement ist somit bei dieser Variante ein offener Profilkörper.

Bevorzugterweise stützt sich der freie Endabschnitt des Stützabschnitts an der hinteren Stützstelle ab und der freie Endabschnitt des Federabschnitts greift an den Dichtelementen an. Hierdurch werden eine direkte Abstützung und eine direkte Krafteinleitung erreicht.

Die Lagerung der Dichtelemente erfolgt mittels sich in Axialrichtung durch die Umfangsnut erstreckende Lagerungsstifte. Die Lagerungsstifte sind insbesondere derart ausgebildet, das sie in Anlage an dem einen Statorbauteil mit ihrem Kopfabschnitt jeweils einen Dichtbereich bilden, so dass eine Leckage entlang der Lagerungsstifte bzw. durch die Bohrungen, durch die Lagerungsstifte geführt sind, verhindert wird. Der Kopfabschnitt kann natürlich auch ein sonstiger Radialbund der Lagerungsstifte sein. Zudem ist eine derartige Lagerung fertigungstechnisch einfach auszuführen, benötigt eine minimale Anzahl von Teilen und ist robust gegen thermische und mechanische Beanspruchungen. Um Verkippungen der Dichtelemente in Axialrichtung zu ermöglichen, sind diese insbesondere spielbehaftet auf den Lagerungsstiften gehaltert.

Um eine gleichmäßige Vorspannung der Dichtelemente über ihre Umfangserstreckung zu erreichen, können mehrere Vorspannelemente einem Dichtelement zugeordnet sein. Beispielsweise sind drei Vorspannelemente einem Dichtelement zugeordnet, wobei zwei Dichtelemente in den Randbereichen des Dichtelementes und ein Vorspannelement mittig zwischen den beiden randseitigen Vorspannelementen an dem Dichtelement angreift. Bei lediglich zwei Vorspannelementen ist es vorteilhaft, wenn diese vom Rand in Richtung der Dichtelementenmitte versetzt an dem jeweiligen Dichtelement angreifen. Insbesondere wird es zur Vergleichmäßigung der Vorspannkraft bevorzugt, wenn die beiden, drei oder mehr Vorspannelemente in Umfangsrichtung betrachtet gleichmäßig voneinander beabstandet sind.

In einer vorteilhaften Ausführungsform ist ein Abstandsverhältnis zwischen einer Krafteinleitungsstelle, an der das Vorspannelement eine Kraft auf das Dichtelement einleitet, zur lagerungsnahen Dichtkante und zur lagerungsfernen Dichtkante kleiner als 1:5, vorzugsweise kleiner als 1:6, weiter bevorzugt kleiner oder gleich 1:7. Mit anderen Worten ist die lagerungsferne Dichtkante, über die beispielsweise bei einer Spaltverkleinerung die Gegenkraft eingeleitet wird, mindestens fünfmal, vorzugsweise mindestens sechmal, weiter bevorzugt mindestens siebenmal soweit wie die lagerungsnahe Dichtstelle 20 von der Krafteinleitungsstelle 42 entfernt. Auf diese Weise kommt es nur zu relativ kleinen Auslenkungen des freien Endes des Vorspannelements im Vergleich zu den Relativbewegungen zwischen den beiden Statorbauteilen. Dadurch wird das Risiko minimiert, dass das Vorspannelement über die Zeit hinweg ihre Vorspannkraft verliert. Die Bestimmung des Abstandsverhältnisse erfolgt vorzugsweise in einem die Lagerung bzw. Lagerungsstelle zeigenden Meridianschnitt der Strömungsmaschine, d.h. einem Schnitt, welcher die Rotorlängsachse der Strömungsmaschine und die Lagerung bzw. Lagerungsstelle umfasst. Aus einer solchen Schnittansicht lassen sich die relevanten Abstände einfach herausmessen.

Sonstige vorteilhafte Ausführungsbeispiele der Erfindung sind Gegenstand weiterer Unteransprüche.

Im Folgenden werden bevorzugte Ausführungsbeispiele der Erfindung anhand von schematischen Darstellungen näher erläutert. Es zeigen:
- Figur 1: einen Längsschnitt durch eine erfindungsgemäße Strömungsmaschine im Bereich einer ersten beispielhaften Dichtungseinrichtung,
- Figur 2: eine beispielhafte Positionierung von Vorspannelementen an einem Dichtelement,
- Figur 3: eine perspektivische Einzeldarstellung eines Vorspannelements, und
- Figur 4: einen Längsschnitt durch eine erfindungsgemäße Strömungsmaschine im Bereich einer zweiten beispielhaften Dichtungseinrichtung.

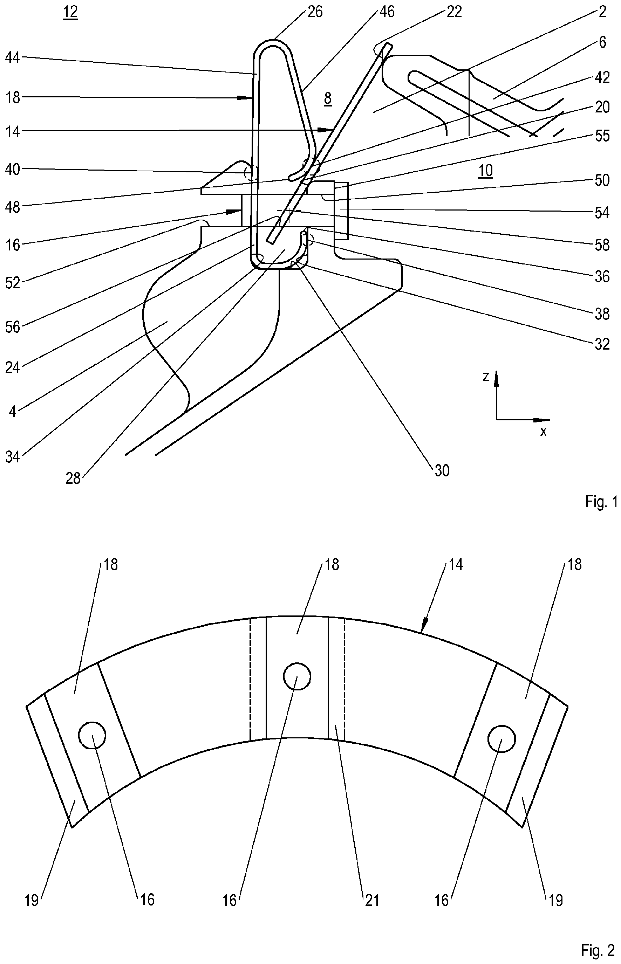

In Figur 1 ist ein Schnitt in Axialrichtung x durch ein erstes Ausführungsbeispiel einer Strömungsmaschine 1 im Bereich eines Spaltes 2 zwischen zwei Statorbauteilen 4, 6 gezeigt. Die Statorbauteile 4, 6 erstrecken sich im Wesentlichen in Axialrichtung x der Strömungsmaschine 1, die von einer zwar in der Schnittebene der Figur 1 liegenden, jedoch nicht gezeigten Rotorlängsachse definiert wird. Die Statorbauteile 4, 6 umgreifen die Rotorlängsachse und sind somit als rotationssymmetrische Ringbauteile ausgeführt, welche jedoch bei Bedarf in Umfangsrichtung segmentiert ausgebildet sein können. Entsprechend ist der Spalt 2 ein Ringspalt. Als Statorbauteile 4, 6 werden dabei alle nichtrotierenden Bauteile der Strömungsmaschine aufgefasst.

Der Spalt 2 erstreckt sich zwischen einem Außenbereich 8, der beispielsweise direkt mit einer Kühlluftkavität verbunden ist, und einem Innenbereich 10, der beispielsweise mit einem Heißgaskanal der Strömungsmaschine verbunden ist. Im Stillstand der Strömungsmaschine herrscht in beiden Bereichen 8, 10 ein gleicher Ruhedruck. Beim Hochfahren baut sich im Innenbereich 8 schneller ein Druck als im Außenbereich 8 auf. Im Betrieb hingegen herrscht im Außenbereich 8 ein höherer Druck als im Innenbereich 10. Um zu verhindern, dass zwischen den Bereichen 8, 10 ein Druckausgleich erfolgt, weist die Strömungsmaschine eine Dichtungseinrichtung 12 zum Abdichten bzw. Verschließen des Spaltes 2 in jedem Betriebszustand auf.

Die Dichtungseinrichtung 12 hat eine Vielzahl von Dichtelementen 14, Lagerungsstiften 16 und Vorspannelementen 18.

Die Dichtelemente 14 haben gemäß Figur 2 einen plattenförmigen Querschnitt und sind in Umfangsrichtung bogenförmig (Figur 2). Sie sind zu einem Ring zusammengesetzt und jeweils an dem hier radial inneren Statorbauteil 4 mittels Lagerungsstiften 16 in Axialrichtung x verkippbar gelagert. Die Dichtelemente 14 sind somit als Dichtklappen ausgeführt. Sie sind jeweils gegen eine Dichtkante 20, 22 des radial inneren bzw. lagerungsseitigen Statorbauteils 4 und des lagerungsfreien bzw. radial äußeren Statorbauteils 6 mittels mehreren Vorspannelementen 18 vorgespannt. Die Dichtkanten 20, 22 verlaufen in Umfangsrichtung und weisen in Richtung des Innenbereichs 8.

In dem hier gezeigten Ausführungsbeispiel sind drei Vorspannelemente 18 und drei Lagerungsstreifte 16 pro Dichtelement 14 vorgesehen (Figur 2). Die Anzahl der Lagerungsstifte 16 entspricht bevorzugterweise der Anzahl der Vorspannelemente 18. Zwei Vorspannelemente 18 sind dabei in umfangsseitigen Randbereichen 19 des Dichtelementes 14 angeordnet und ein Vorspannelement 18 ist mittig zwischen den randseitigen Vorspannelementen in der Dichtelementenmitte 21 angeordnet.

Wie in Figur 1 gezeigt, sind die Vorspannelemente 18 im Außenbereich 8 an dem radial inneren bzw. lagerungsseitigen Statorbauteil 4 angeordnet. Sie beaufschlagen die Dichtelemente 14 von den Dichtkanten 20, 22 aus betrachtet rückseitig mit einer in Richtung des Innenbereichs 10 zeigenden Vorspannkraft. Die Vorspannelemente 18 beaufschlagen die Dichtelemente 14 somit mit einer Vorspannkraft, die in Richtung des Bereichs (Innenbereich 10) zeigt, in dem sich beim Hochfahren gegenüber dem Ruhedruck schneller ein Druck als in dem anderen Bereich (Außenbereich 8) aufbaut. Die Dichtelemente 14 sind somit gegen die Dichtkanten 20, 22 vorgespannt, so dass sich beim Hochfahren der Strömungsmaschine 1 aus dem Stillstand in einen Betriebszustand eine Druckdifferenz zwischen den Bereichen 8, 10 aufbauen kann. Wenn im Betrieb im Außenbereich 8 ein höherer Druck als im Innenbereich 8 herrscht, zeigen die Vorspannkräfte in Richtung der sich aufgebauten Druckdifferenz.

Die Vorspannelemente 18 haben jeweils einen Stützabschnitt 24 und einen Federabschnitt 26. Der Stützabschnitt 24 und der Federabschnitt 26 bestehen aus dem gleichen federelastischen Material und sind einteilig miteinander verbunden. Der Stützabschnitt 24 ist hakenförmig ausgeführt und taucht in eine Umfangsnut 28 des lagerungsseitigen Statorbauteils 4 ein. Die Vorspannelemente 18 liegen dabei auf dem Grund 30 der Umfangsnut 28 auf und sind wegen ihrer grundsätzlich vorhandenen federelastischen Eigenschaften zwischen gegenüberliegenden Nutwandungen 32, 34 eingeklemmt, so dass Fertigungstoleranzen, thermische Längenänderungen und dergleichen ausgeglichen werden können. Dabei stützen sie sich mit ihrem jeweils freien Endabschnitt 36 an einer in Richtung eines durch die Dichtungseinrichtung 12 unterbundenen Leckagestroms bzw. in Axialrichtung x betrachtet hinteren Stützstelle 38 ab. Der freie Endabschnitt 36 des Vorspannelements 18 ist radial innen zum Lagerungsstift 16 angeordnet. Zudem stützen sich die Vorspannelemente 18 an einer in Axialrichtung x betrachtet vorderen Stützstelle 40 ab.

Die Stützstellen 38, 40 werden von schräg gegenüberliegenden Wandungsabschnitten der Umfangsnut 28 gebildet. Die vordere Stützstelle 40 ist radial außen zur hinteren Stützstelle 38 angeordnet bzw. gemäß der Darstellung in Figur 1 ist die vordere Stützstelle 40 oberhalb der Lagerungsstifte 16 bzw. radial außen und die hintere Stützstelle 38 unterhalb der Lagerungsstifte 16 bzw. radial innen angeordnet. Der jeweilige Lagerungsstift 16 ist somit in Radialrichtung z zwischen den Stützstellen 38, 40 angeordnet. In Radialrichtung z betrachtet befindet sich die vordere Stützstelle 40 in etwa auf Höhe einer Krafteinleitungsstelle 42 der Vorspannelemente 18 in die Dichtelemente 14, und in Axialrichtung x vor der lagerungsseitigen Dichtkante 20. Die hintere Stützstelle 38 befindet sich in Radialrichtung z betrachtet radial innen zur lagerungsseitigen Dichtkante 20 und in dem hier gezeigten Ausführungsbeispiel in etwa gleicher axialer Position wie die lagerungsseitige Dichtkante 20.

Die vordere Stützstelle 40 bewirkt eine Abstützung des jeweiligen Vorspannelements 18 an dem lagerungsseitigen Statorbauteil 4 bei Vorspannung der Dichtelemente 14. Die hintere Stützstelle 38 verhindert ein Verkippen des jeweiligen Vorspannelements 18 um die vordere Stützstelle 38 beim Überwinden der Vorspannung bzw. Vorspannkraft durch eine auf die Dichtelemente 14 wirkende Gegenkraft, beispielsweise durch Spaltverkleinerungen aufgrund von thermischen Ausdehnungen, Maschinenschwingungen und dergleichen.

Der Federabschnitt 26 ist U-förmig ausgebildet und ragt radial aus der Umfangsnut 28 heraus. Er hat zwei Schenkel 44, 46, von denen der eine eine radiale Verlängerung des Stützabschnitts 24 darstellt und der andere in einen freien Endabschnitt 48 übergeht, mittels dem die Vorspannelemente 18 an dem Dichtelement 14 angreifen. Der Kontaktbereich zwischen dem freien Endabschnitt 48 des Federabschnitts 26 und dem Dichtelement 14 stellt somit die vorgenannte Krafteinleitungsstelle 42 dar. Die Krafteinleitungsstelle 42 ist zwischen den Dichtkanten 20, 22 nahe der lagerungsseitigen Dichtkante 20 und somit entfernt von der lagerungsfernen Dichtkante 22 angeordnet. Sie erstreckt sich vorzugsweise in Umfangsrichtung, um zu den beiden Dichtbereichen der Dichtkanten 20, 24 einen rückwärtigen Dichtbereich zu bilden. Mittel dieses dritten Dichtbereichs kann ein Leckagestrom entlang des Lagerungsstiftes 16 verhindert bzw. zumindest reduziert werden.

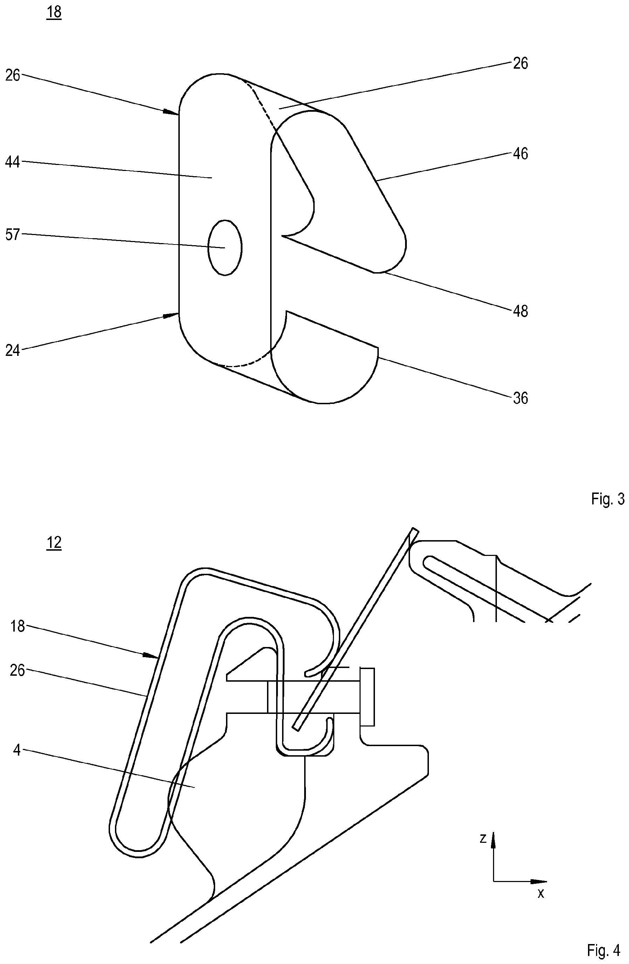

Eine perspektivische Einzeldarstellung eines Vorspannelements 18 ist in Figur 3 gezeigt. Es ist deutlich eine klammerartige Gestalt mit den Stützabschnitt 24 und dem Federabschnitt 26 zu erkennen. Zudem ist eine Bohrung 57 zum Durchführen jeweils einer der Lagerungsstifte 16 gezeigt. Die Bohrung 57 ist derart angeordnet, dass ein Lagerungsstift 16 zwischen dem Endabschnitt 36 des Stützabschnitts 24 und dem Endabschnitt 48 des Schenkels 46 des Federabschnitts 26 hindurchgeführt werden kann. Beispielsweise sind die Vorspannelemente 18 gebogene Blechstreifen.

Die Lagerungsstifte 16 dienen zur in Axialrichtung x verkippbaren Lagerung der Dichtelemente 14. Hierzu sind die Lagerungsstift 16 durch eine auf sie bezogene Übermaßbohrung 56 des Dichtungselementes 14 geführt. Der Mittelpunkt der jeweiligen Übermaßbohrung 56 im Dichtungselement 14 kann hier als dessen Lagerung bzw. Lagerungsstelle 58 angesehen werden. Grundsätzlich sind die Lagerungsstifte 16 jeweils in Axialrichtung x orientiert und durchsetzen die Umfangsnut 28. Sie sind in fluchtenden Axialbohrungen 50, 52 der Nutwandungen 32, 34 eingesetzt und über einen verbreiteten Kopfabschnitt 54 in seiner Axialposition fixiert. Bevorzugterweise werden die Lagerungstifte 16 von dem Innenbereich 10 aus in die Axialbohrungen 50, 52 eingeführt, so dass sich deren jeweiliger Kopfabschnitt 54 im Innenbereich 10 befindet. Durch die Anlage des Kopfabschnitts 54 am jeweils einen die Axialbohrung 50 umgebenden Flächenabschnitt 55 wird ein dritter Dichtbereich gebildet, so dass eine Leckage entlang der Lagerungsstifte 16 bzw. durch die Axialbohrungen 50, 52 verhindert wird. Eine Abdichtung kann bereits dadurch begünstigt werden, dass die Lagerungsstifte 16 in die Axialbohrungen 50, 52 eingepresst sind. Alternativ können die Lagerungsstifte 16 auch ein Außengewinde aufweisen, welches in ein komplementär ausgebildetes Innengewinde der jeweiligen stromaufwärtigen Axialbohrung 52 eingreift. Die Lagerungsstifte 16 sind zwischen den freien Endabschnitten 36, 48 des Vorspannelementes 14 hindurch geführt und durchsetzen einen Bereich des Stützabschnitts 24, der nahe der vorderen Stützstelle 40 in den Federabschnitt 26 übergeht. Zum Durchführen der Lagerungsstifte 16 kann der Stützabschnitt 24 eine in Figur 3 bezifferte Bohrung 57 aufweisen, geschlitzt bzw. fingerartig und dergleichen sein.

Wie in Figur 1 gezeigt, sind beide Dichtkanten 20, 22 radial außen zum jeweiligen Lagerungsstift 16 angeordnet bzw. die lagerungsnahe Dichtkante 20 ist zwischen dem Lagerungsstift 16 und der lagerungsfernen Dichtkante 22 angeordnet. Die Einleitung der Vorspannkraft in die Dichtelemente 14 erfolgt nahe der lagerungsnahen Dichtkante 20 jenseits des Lagerungsstiftes 16 bzw. radial außen zum jeweiligen Lagerungsstift 16. Die Einleitung der Vorspannkraft erfolgt somit entfernt von der lagerungsfernen Dichtkante 22. Beispielsweise beträgt ein Abstandsverhältnis etwa 1:7 zwischen der Krafteinleitungsstelle 42 zur lagerungsnahen Dichtkante 20, welche einen Drehpunkt des Dichtelements 14 definiert und zur lagerungsfernen Dichtkante 22, d.h. die lagerungsferne Dichtkante 22, über die beispielsweise bei einer Spaltverkleinerung die Gegenkraft eingeleitet wird, ist etwa fünfmal soweit wie die lagerungsnahe Dichtstelle 20 von der Krafteinleitungsstelle 42 entfernt. Da die Vorspannelemente 16 nahe der lagerungsnahe Dichtstelle 20 an dem Dichtelement 14 angreifen, wird erreicht, dass bei großen Spaltänderungen aufgrund von thermischen Belastungen, mechanischen Schwingungen und dergleichen die Vorspannelemente 18 nur kleine Stauchungen bzw. Dehnungen durchführen, wodurch einer vorzeitigen Alterung aufgrund von Kriecheffekten entgegengewirkt wird. Die Vorspannelemente 18 haben eine hohe Standfestigkeit und behalten ihre Vorspannung, so dass es beim Hochfahren der Strömungsmaschine 1 die Dichtelemente 14 verlässlich dichtend gegen die Dichtkanten 20,22 drückt.

In Figur 4 ist ein Schnitt durch ein zweites Ausführungsbeispiel im Bereich einer Dichtungseinrichtung 12 der erfindungsgemäßen Strömungsmaschine 1 gezeigt. Im Unterschied zum ersten Ausführungsbeispiel nach Figur 1 ist ein U-förmiger Federabschnitt 26 eines Vorspannelements 18 entgegen der Vorspannkraft bzw. rückseitig abgewinkelt und gegenüber dem Federabschnitt 26 des ersten Ausführungsbeispiels verlängert. Somit zeichnen sich diese Vorspannelemente 18 durch eine größere effektivere bzw. freie Federlänge aus als das vorbeschriebene Ausführungsbeispiel. Die Abwinkelung des verlängerten Federabschnitts 26 ist insbesondere derart, dass der Federabschnitt 26 in Richtung des lagerungsseitigen Statorbauteils 4 geführt ist, so dass eine Behinderung benachbarter Bauteile durch den verlängerten Federabschnitt 26 verhindert wird, eine Schwingungsanregung des freien Federabschnitts 26 unterdrückt wird, und beispielsweise eine Beeinflussung von Strömungsverhältnissen durch den verlängerten Federabschnitt 26 verhindert wird.

Offenbart ist eine Strömungsmaschine mit einer Dichtungseinrichtung zum Abdichten eines Spaltes zwischen zwei Bauteilen, mit einer Vielzahl von in Richtung einer Relativverschiebung der Bauteile verkippbaren Dichtelement, die an dem einen Bauteil gelagert sind und den Spalt überbrücken, und mit Vorspannelementen, mittels denen die verkippbaren Dichtelemente gegen eine jeweilige Dichtkante der Bauteile vorgespannt sind, wobei sich die Vorspannelemente jeweils an einer vorderen Stützstelle und einer hinteren Stützstelle des lagerungsseitigen Bauteils abstützen, die in Axialrichtung und Radialrichtung der Strömungsmaschine voneinander beabstandet sind, wobei die vordere Stützstelle radial außen und die hintere Stützstelle radial innen zur Lagerung angeordnet ist.

### Bezugszeichenliste

- 1: Strömungsmaschine
- 2: Spalt
- 4: radial inneres bzw. lagerungsseitiges Statorbauteil
- 6: radial äußeres bzw. lagerungsfernes Statorbauteil
- 8: Außenbereich
- 10: Innenbereich
- 12: Dichtungseinrichtung
- 14: Dichtelement
- 16: Lagerungsstift
- 18: Vorspannelement
- 19: Randbereich
- 20: lagerungsnahe Dichtkante
- 21: Dichtelementenmitte
- 22: lagerungsferne Dichtkante
- 24: Stützabschnitt
- 26: Federabschnitt
- 28: Umfangsnut
- 30: Grund
- 32: stromabwärtige Nutwandung
- 34: stromaufwärtige Nutwandung
- 36: Endabschnitt des Stützabschnitts
- 38: hintere Stützstelle
- 40: vordere Stützstelle
- 42: Krafteinleitungsstelle
- 44: Schenkel
- 46: Schenkel
- 48: Endabschnitt des Federabschnitts
- 50: Axialbohrung der stromaufwärtigen Nutwandung
- 52: Axialbohrung in der stromabwärtigen Nutwandung
- 54: Kopfabschnitt des Lagerungsstiftes
- 56: Übermaßbohrung des Dichtungselements
- 57: Bohrung Vorspannelement
- 58: Lagerung bzw. Lagerungsstelle des Dichtelements

- x: Axialrichtung (bezogen auf die Rotorlängsachse der Strömungsmaschine)
- z: Radialrichtung (bezogen auf die Rotorlängsachse der Strömungsmaschine)

## Patentansprüche

1. Strömungsmaschine (1) mit einer Dichtungseinrichtung (12) zum Abdichten eines Spaltes (2) zwischen zwei Statorbauteilen, mit einer Vielzahl von Dichtelementen (14), die an dem einen Statorbauteil (4) gelagert sind und den Spalt (2) überbrücken, und mit einer Vielzahl von Vorspannelementen (18), mittels denen die Dichtelemente (14) gegen eine jeweilige Dichtkante (20, 22) der Statorbauteile (4, 6) vorgespannt sind, wobei die Vorspannelemente (18) an dem lagerungsseitigen Statorbauteil (4) angeordnet sind und die Dichtkante (22) des lagerungsseitigen Statorbauteils (4) lagerungsnah und die Dichtkante (22) des lagerungsfreien Statorbauteils (6) lagerungsfern ist, wobei die lagerungsnahe Dichtkante (20) zwischen der Lagerung (58) und der lagerungsfernen Dichtkante (22) angeordnet ist, wobei die Vorspannelemente (18) rückseitig zu den Dichtkanten (20, 22) zwischen den Dichtkanten (20, 22) an den Dichtelementen (14) nahe der lagerungsnahen Dichtkante (20) und entfernt von der lagerungsfernen Dichtkante (22) angreifen, wobei sich die Vorspannelemente (18) jeweils an einer vorderen Stützstelle (40) und einer hinteren Stützstelle (38) des lagerungsseitigen Statorbauteils abstützen, die in Axialrichtung und Radialrichtung der Strömungsmaschine (1) voneinander beabstandet sind,
wobei die Vorspannelemente (18) mit jeweils einem hakenartigen Stützabschnitt (24) in einer Umfangsnut (28) des lagerseitigen Statorbauteils (4) aufgenommenen sind und die Stützstellen (38, 40) von zwei radial versetzt zueinander gegenüberliegenden Nutwandungsabschnitten gebildet sind, **dadurch gekennzeichnet, dass** die Lagerung (58) der Dichtelemente (14) mittels sich in Axialrichtung durch die Umfangsnut (28) erstreckende Lagerungsstifte (16) erfolgt, und wobei die vordere Stützstelle (40) radial außen und die hintere Stützstelle (38) radial innen zur Lagerung (58) angeordnet ist.

2. Strömungsmaschine nach Patentanspruch 1, wobei die Vorspannelemente (18) jeweils einen U-förmigen Federabschnitt (26) haben.

3. Strömungsmaschine nach Patentanspruch 2, wobei der Federabschnitt (26) rückwärtig abgewinkelt ist.

4. Strömungsmaschine nach einem der Patentansprüche 2 oder 3, wobei der Federabschnitt (26) und der Stützabschnitt (24) zwei gegenüberliegende Endabschnitte (36, 48) haben, zwischen denen die Lagerung (58) der Dichtelemente (14) erfolgt,

5. Strömungsmaschine nach Patentanspruch 4, wobei sich der Endabschnitt (36) des Stützabschnitts (24) an der hinteren Stützstelle (38) abstützt und der Endabschnitt (48) des Federabschnitts (26) an dem Dichtelementen (14) angreift.

6. Strömungsmaschine nach einem der vorhergehenden Patentansprüche, wobei mehrere Vorspannelemente (18) jeweils einem Dichtelement (14) zugeordnet sind.

7. Strömungsmaschine nach einem der vorhergehenden Patentansprüche, wobei ein Abstandsverhältnis zwischen einer Krafteinleitungsstelle (42), an der das Vorspannelement (18) eine Kraft auf das Dichtelement (14) einleitet, zur lagerungsnahen Dichtkante (20) und zur lagerungsfernen Dichtkante (22) kleiner als 1:5, vorzugsweise kleiner als 1:6, weiter bevorzugt kleiner oder gleich 1:7 ist.

## Claims

1. Turbomachine (1) comprising a sealing means (12) for sealing a gap (2) between two stator components, comprising a plurality of sealing elements (14) that are mounted on one stator component (4) and bridge the gap (2), and comprising a plurality of preloading elements (18) by means of which the sealing elements (14) are preloaded against a particular sealing edge (20, 22) of the stator components (4, 6), the preloading elements (18) being arranged on the mounting-side stator component (4), and the sealing edge (22) of the mounting-side stator component (4) being close to the mounting and the sealing edge (22) of the stator component (6) that is without mounting being remote from the mounting, the sealing edge (20) that is close to the mounting being arranged between the mounting (58) and the sealing edge (22) that is remote from the mounting, the preloading elements (18) engaging, at the rear with respect to the sealing edges (20, 22), between the sealing edges (20, 22) on the sealing elements (14), close to the sealing edge (20) that is close to the mounting, and at a distance from the sealing edge (22) that is remote from the mounting, each of the preloading elements (18) being supported at a front support point (40) and a rear support point (38) of the mounting-side stator component, which support points are mutually spaced in the axial and the radial direction of the turbomachine (1), the preloading elements (18) being received in a circumferential groove (28) in the mounting-side stator component (4) by means of a hook-shaped support portion (24) in each case, and the support points (38, 40) being formed by two groove wall portions that are opposed so as to be radially mutually offset, **characterized in that** the mounting (58) of the sealing elements (14) takes place by means of mounting pins (16) that extend through the circumferential groove (28) in the axial direction, and the front support point (40) being arranged radially outwards and the rear support point (38) being arranged radially inwards with respect to the mounting (58).

2. Turbomachine according to claim 1, wherein the preloading elements (18) each have a U-shaped resilient portion (26).

3. Turbomachine according to claim 2, wherein the resilient portion (26) is bent backwards.

4. Turbomachine according to either claim 2 or claim 3, wherein the resilient portion (26) and the support portion (24) have two opposing end portions (36, 48) between which the mounting (58) of the sealing elements (14) takes place.

5. Turbomachine according to claim 4, wherein the end portion (36) of the support portion (24) is supported at the rear support point (38) and the end portion (48) of the resilient portion (26) engages on the sealing element (14).

6. Turbomachine according to any of the preceding claims, wherein a plurality of preloading elements (18) are each associated with one sealing element (14).

7. Turbomachine according to any of the preceding claims, wherein a distance ratio of a force-application point (42), at which the preloading element (18) applies a force to the sealing element (14), from the sealing edge (20) that is close to the mounting and from the sealing edge (22) that is remote from the mounting (22) is less than 1:5, preferably less than 1:6, more preferably less than or equal to 1:7.

## Revendications

1. Turbomachine (1) comprenant un dispositif d'étanchéité (12) servant à l'étanchéité d'une fente (2) ménagée entre deux composants de stator, une pluralité d'éléments d'étanchéité (14) qui sont montés au niveau de l'un des composants de stator (4) et qui couvrent la fente (2), et une pluralité d'éléments de précontrainte (18) au moyen desquels les éléments d'étanchéité (14) sont précontraints contre un bord d'étanchéité respectif (20, 22) des composants de stator (4, 6), les éléments de précontrainte (18) étant disposés au niveau du composant de stator (4) côté point de montage et le bord d'étanchéité (22) du composant de stator (4) côté point de montage étant situé à proximité du point de montage et le bord d'étanchéité (22) du composant de stator (6) sans point de montage étant éloigné du point de montage, le bord d'étanchéité (20) à proximité du point de montage étant disposé entre le point de montage (58) et le bord d'étanchéité (22) éloigné du point de montage, les éléments de précontrainte (18) s'engageant du côté arrière des bords d'étanchéité (20, 22) entre les bords d'étanchéité (20, 22) au niveau des éléments d'étanchéité (14) près du bord d'étanchéité (20) à proximité du point de montage et éloignés du bord d'étanchéité (22) éloignée du point de montage, les éléments de précontrainte (18) s'appuyant chacun sur un point d'appui avant (40) et un point d'appui arrière (38) du composant de stator côté point de montage qui sont espacés l'un de l'autre dans la direction axiale et la direction radiale de la turbomachine (1),
les éléments de précontrainte (18) pourvus chacun d'une partie de support (24) en forme de crochet étant reçus dans une rainure périphérique (28) du composant de stator (4) côté point de montage et les points d'appui (38, 40) étant formés de deux parties de paroi de rainure opposées l'une à l'autre et décalées radialement l'une de l'autre,
**caractérisée en ce que**
le point de montage (58) des éléments d'étanchéité (14) est réalisé au moyen de tiges de montage (16) s'étendant dans la direction axiale à travers la rainure périphérique (28), et le point d'appui avant (40) étant disposé radialement à l'extérieur et le point d'appui arrière (38) étant disposé radialement à l'intérieur par rapport au point de montage (58).

2. Turbomachine selon la revendication 1, dans laquelle les éléments de précontrainte (18) comporte chacun une partie à ressort (26) en forme de U.

3. Turbomachine selon la revendication 2, dans laquelle la partie à ressort (26) est inclinée vers l'arrière.

4. Turbomachine selon l'une des revendications 2 ou 3, dans laquelle la partie à ressort (26) et la partie de support (24) comportent deux parties d'extrémité opposées (36, 48), entre lesquelles le point de montage (58) des éléments d'étanchéité (14) est réalisé.

5. Turbomachine selon la revendication 4, dans laquelle la partie d'extrémité (36) de la partie de support (24) prend appui sur le point d'appui arrière (38) et la partie d'extrémité (48) de la partie à ressort (26) s'engage sur les éléments d'étanchéité (14).

6. Turbomachine selon l'une des revendications précédentes, dans laquelle une pluralité d'éléments de précontrainte (18) sont associés chacun à un élément d'étanchéité (14).

7. Turbomachine selon l'une des revendications précédentes, dans laquelle un rapport des distances entre un point de transmission de force (42) au niveau duquel l'élément de précontrainte (18) applique une force sur l'élément d'étanchéité (14), au bord d'étanchéité (20) à proximité du point de montage et au bord d'étanchéité (22) éloignée du point de montage, est inférieur à 1:5, de préférence inférieur à 1:6, de manière plus préférée inférieur ou égal à 1:7.
